# FASCICULE DE BREVET EUROPEEN

(11) **EP 2 764 605 B1**
(45) Date de publication et mention de la délivrance du brevet: **22.04.2020**
(21) Numéro de dépôt: 12787886.6
(22) Date de dépôt: 04.10.2012
(51) Int. Cl.: H02K 1/24, H02K 1/32

(54) **ROTOR COMPORTANT DES ÉPANOUISSEMENTS POLAIRES A CANAUX DE REFROIDISSEMENT**
ROTOR MIT POLSCHUHEN MIT KÜHLKANÄLEN
ROTOR COMPRISING POLE SHOES WITH COOLING CHANNELS

(30) Priorité: 06.10.2011 FR 1159042
(43) Date de publication de la demande: 13.08.2014
(73) Titulaire: Moteurs Leroy Somer, 16000 Angoulême (FR)
(72) Inventeur: DUTAU, Alexis, 16000 Angoulême (FR)
(74) Mandataire: Nony
(86) Numéro de dépôt international: PCT/IB2012/055324
(87) Numéro de publication internationale: WO 2013/050955

(56) Documents cités:
- EP-A1- 0 881 757
- DE-A1- 1 909 123
- JP-U- 56 174 937
- US-A- 4 139 789

## Description

La présente invention a pour objet un rotor bobiné pour machine électrique tournante, et une machine comportant un tel rotor.

La présente invention s'applique plus particulièrement mais non exclusivement au refroidissement des enroulements du rotor des machines électriques tournantes ouvertes, monophasées ou polyphasées, ayant une vitesse de rotation comprise par exemple entre 0 et 10000 tours par minute, et une puissance par exemple comprise entre 0,1 et 25 MW.

On désigne par « machine électrique tournante ouverte » une machine refroidie par une circulation d'air prélevé à l'extérieur de la machine.

Pour assurer le refroidissement d'un rotor, il est connu d'aménager des canaux de refroidissement dans celui-ci.

La demande GB 2 425 662 enseigne ainsi de réaliser de petites découpes dans les épanouissements polaires des pôles d'un rotor à pôles saillants, de manière à ménager un canal entre chaque pôle et les conducteurs électriques bobinés de ce pôle.

Il est connu par le brevet US 3 846 651 de ménager des canaux orientés radialement à travers les épanouissements polaires des pôles rapportés d'un rotor afin de créer des passages permettant la circulation d'un fluide réfrigérant.

Le brevet US 3 633 054 enseigne de disposer contre les épanouissements polaires d'un pôle saillant une barre métallique dans laquelle sont ménagés des orifices permettant à un fluide de refroidissement de circuler.

La publication WO 2010/079455 divulgue divers agencements destinés au refroidissement d'un rotor à pôles saillants.

Le brevet US 4 139 789 décrit des pôles comportant plusieurs canaux de refroidissement, une partie de certains de ces canaux étant disposée à la naissance des épanouissements polaires.

Le modèle d'utilité JP 56-174937 décrit un rotor comportant des pôles, dépourvus d'épanouissements polaires, présentant des canaux de refroidissement.

La demande DE 19 09 123 divulgue un rotor comportant une armature métallique disposée entre les enroulements magnétiques et les pôles, et parcourue de canaux de refroidissement.

Il existe un besoin pour améliorer encore le refroidissement d'un rotor de machine électrique tournante.

L'invention vise à répondre à ce besoin et elle y parvient, selon l'un de ses aspects, grâce à un rotor pour machine électrique tournante selon la revendication 1.

Par « canal interne » il faut comprendre un canal de contour fermé en section transversale.

L'invention permet d'améliorer les performances thermiques de la machine et de diminuer les échauffements des bobinages rotoriques pour un volume de cuivre donné.

L'invention permet également une diminution de la température maximale des conducteurs électriques et des isolants pour un volume de cuivre donné, et une diminution du coût global de la machine, grâce à la diminution de la quantité de matière active à états thermiques identiques par rapport à une machine connue.

Dans la suite, le fluide de refroidissement est de préférence l'air, mais l'invention n'est pas limitée à l'air comme fluide de refroidissement.

Le rotor permet une circulation du fluide de refroidissement le long des canaux.

Selon le refroidissement désiré du rotor, les épanouissements polaires des pôles saillants sont parcourus par un nombre plus ou moins grand de canaux de refroidissement, par exemple entre 2 et 15 canaux.

Les différents canaux de refroidissement peuvent être définis entre des cloisons ménagées dans les épanouissements polaires des pôles.

Les cloisons peuvent s'étendre sur tout ou partie de la longueur du rotor. En particulier, les ailettes peuvent être interrompues et l'épanouissement polaire présente alors une forme dentelée.

Les cloisons peuvent être disposées de diverses façons au sein de l'épanouissement polaire.

Chaque canal de refroidissement peut parcourir toute la longueur de la carcasse magnétique du rotor. Chaque canal de refroidissement peut parcourir de façon continue ou non le rotor selon l'axe longitudinal de ce dernier.

Les épanouissements polaires peuvent présenter une forme dentelée définissant des dents. Les canaux de refroidissement sont alors ménagés dans ces dents. Une telle configuration permet au fluide de refroidissement de subir une alternance de passages à l'intérieur des canaux et de passages dans des zones élargies s'étendant axialement entre les dents. Cela permet d'améliorer encore les échanges thermiques convectifs. De plus, le fluide de refroidissement peut circuler transversalement entre les dents. La présence des épanouissements polaires à la périphérie du rotor permet de bénéficier d'une transformation d'énergie cinétique radiale du fluide de refroidissement en énergie cinétique axiale.

La forme dentelée peut être obtenue par un agencement en quinconce de paquets de tôles, en retournant alternativement les paquets.

Lorsque l'on se déplace autour de l'axe longitudinal du rotor, deux séries de dents consécutives appartenant ou non au même pôle peuvent être décalées axialement d'une dent, l'écartement entre les dents étant par exemple égal à la dimension axiale d'une dent. Cela permet une limitation des pertes de charge.

Chaque épanouissement polaire peut présenter une section ajourée, due aux canaux de refroidissement le parcourant, représentant plus de 25% de sa section totale.

Les pôles saillants comportent chacun un corps de pôle et deux épanouissements polaires. Deux pôles saillants voisins définissent entre eux un espace interpolaire.

Au moins un canal de refroidissement peut être ménagé dans le fond de l'espace interpolaire, afin d'améliorer encore le refroidissement du rotor.

On peut ainsi pour chaque pôle obtenir une circulation du fluide de refroidissement au sein des épanouissements polaires, et une circulation dans les espaces interpolaires.

Les pôles saillants du rotor peuvent être formés par un assemblage de tôles magnétiques.

Chaque tôle magnétique peut être avec tous ses pôles d'une seule pièce. Toutes les tôles du rotor peuvent être identiques, chaque tôle ayant des pôles saillants ne présentant qu'un seul épanouissement polaire, tous les épanouissements d'une tôle étant dirigés dans le même sens circonférentiel. Lors de l'assemblage du rotor, les tôles sont assemblées en se superposant exactement par paquets de l'épaisseur d'une dent telle que précitée, puis un autre paquet formé de tôles disposées à l'envers est accolé au premier, et ainsi de suite de façon à former une alternance de dents et de passages élargis le long de chaque épanouissement polaire.

Le rotor peut comporter des tirants de maintien de l'assemblage de tôles magnétiques.

Le rotor peut comporter, à l'extrémité radialement extérieure des corps de pôle, des logements pour recevoir des amortisseurs.

Le rotor peut comporter deux flasques d'extrémité, afin de faciliter l'opération de bobinage et d'améliorer la tenue mécanique générale du rotor.

L'invention a encore pour objet, selon un autre de ses aspects, une machine électrique tournante comportant un rotor tel que défini ci-dessus.

La machine électrique tournante comporte un stator à l'intérieur duquel tourne le rotor.

La machine peut comporter un ou plusieurs ventilateurs, entrainés ou non par le rotor, pour créer une circulation d'air forcée dans les différents canaux de refroidissement.

L'invention pourra être mieux comprise à la lecture de la description qui va suivre, d'exemples non limitatifs de mise en œuvre de celle-ci, et à l'examen du dessin annexé, sur lequel :
- la figure 1 est une perspective, schématique et partielle, d'un exemple de carcasse magnétique de rotor selon l'invention,
- la figure 2 est une vue de face selon II de la figure 1,
- la figure 3 est une vue analogue à la figure 1 d'un autre exemple de carcasse magnétique de rotor selon l'invention,
- la figure 4 représente isolément et partiellement un pôle saillant selon un exemple de mise en œuvre de l'invention, et
- la figure 5 représente un détail de réalisation d'une machine électrique selon l'invention.

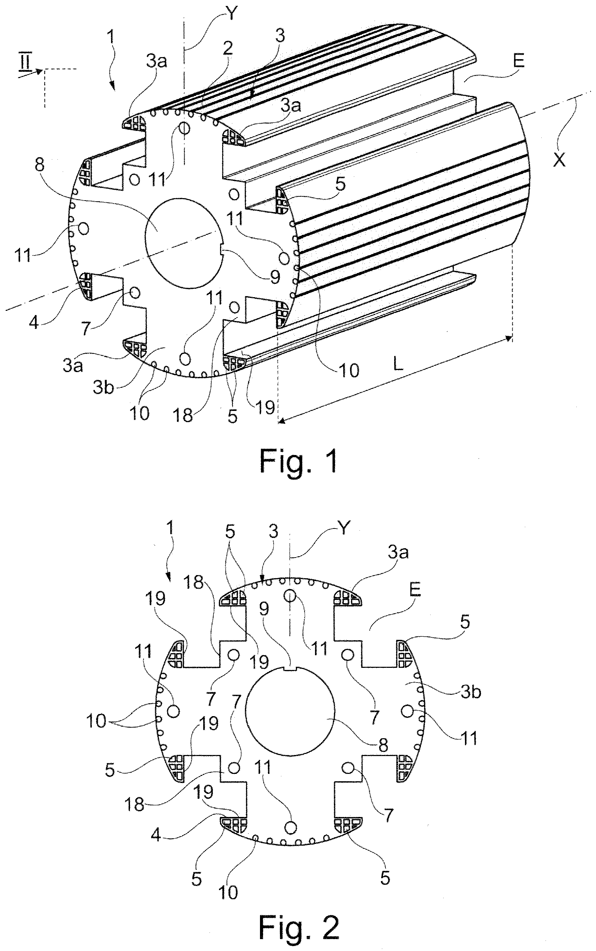

On a représenté à la figure 1 un premier exemple de masse magnétique de rotor 1 qui s'étend selon un axe longitudinal X et comporte un assemblage de tôles magnétiques 2, formant des pôles saillants 3, au nombre de quatre dans l'exemple illustré, l'invention n'étant toutefois pas limitée à une polarité particulière.

Comme on peut le voir sur la figure 1, chaque pôle 3 comporte un corps de pôle 3b, qui s'étend selon un axe médian Y, et deux épanouissements polaires 3a qui font saillie dans la direction circonférentielle.

Deux pôles voisins 3 définissent entre eux un espace interpolaire E.

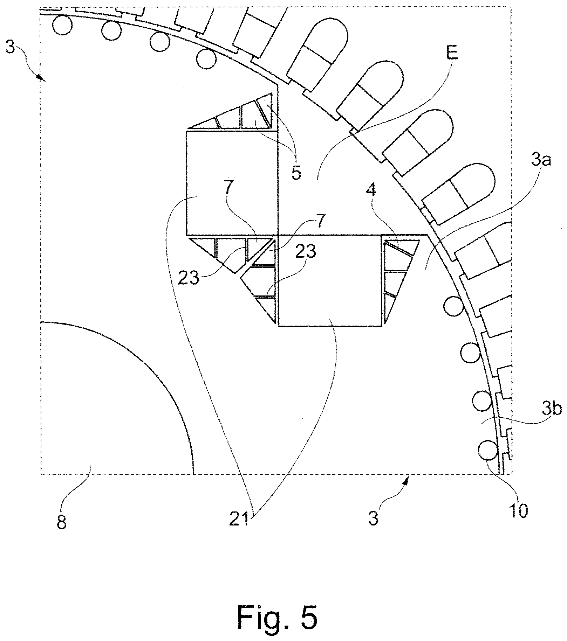

Des conducteurs électriques sont bobinés autour de chaque pôle 3 et définissent des enroulements 21, visibles à la figure 5.

Chaque tôle est de préférence monobloc, étant découpée dans un même feuillard magnétique.

Le rotor 1 peut comporter des tirants non représentés, de maintien de l'assemblage de tôles magnétiques 2, traversant masse rotorique à la faveur de lumières 11 situées sur les pôles 3.

Un logement central 8, muni d'un moyen d'antirotation 9, est ménagé dans la masse rotorique pour recevoir un arbre, non représenté.

La masse rotorique du rotor 1 peut également comporter, comme illustré, des logements 10 pour recevoir des amortisseurs, non représentés.

Conformément à l'invention, au moins un canal interne de refroidissement 5 parcourt axialement chaque épanouissement polaire 3a. Au sein d'une tôle, ce canal ne débouche pas sur le contour extérieur de la tôle, le contour du canal étant fermé.

De préférence, plusieurs canaux de refroidissement 5 parcourent chaque épanouissement polaire 3a, par exemple six canaux, comme illustré aux figures 1 et 2.

Des cloisons 4 réalisées dans les épanouissements polaires 3a des pôles 3 séparent les différents canaux de refroidissement 5.

Dans l'exemple des figures 1 et 2, chaque canal de refroidissement 5 parcourt toute la longueur L du rotor 1 de façon continue, sans interruption.

La masse magnétique peut être formée par l'empilage de tôles magnétiques identiques, les canaux 5 et les cloisons 4 étant formés par découpe de la tôle au sein des épanouissements polaires.

A la base de chaque espace interpolaire E, un canal additionnel 7 de refroidissement peut être prévu, comme illustré.

Le canal 7 est par exemple de section circulaire, étant par exemple réalisé dans une extension 18 en forme d'angle droit, à côtés parallèles aux faces 19 en regard des épanouissements polaires 3a.

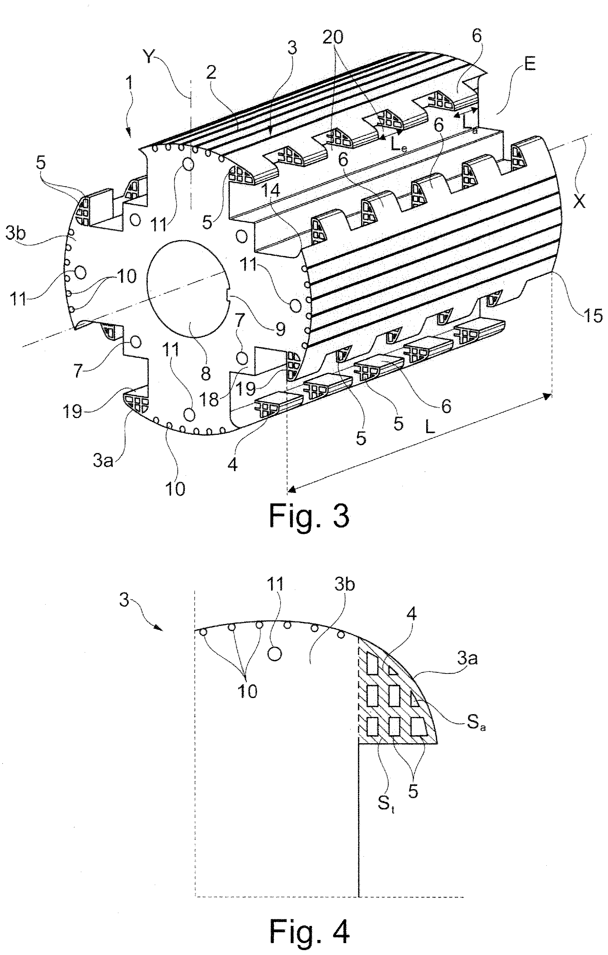

Dans la variante illustrée à la figure 3, les épanouissements polaires 3a présentent chacun une forme dentelée définissant des dents 6, au nombre de cinq par épanouissement polaire 3a dans l'exemple décrit, l'invention n'étant toutefois pas limitée à un nombre de dents particulier.

Les canaux de refroidissement 5 sont ménagés dans les dents 6, et l'intervalle 20 entre les dents 6 définit un passage de section élargie pour le fluide de refroidissement.

Lorsque l'on se déplace autour de l'axe longitudinal X du rotor 1, deux séries consécutives de dents 6 sont décalées axialement d'une dent, la dimension axiale *Lₐ* selon l'axe X d'une dent 6 peut être égale à la dimension *Lₑ* de l'intervalle 20 entre deux dents 6.

Les épanouissements polaires 3b d'un même pôle sont avantageusement dépourvus de dents à deux extrémités axiales 14, 15 opposées, comme représenté à la figure 3. Cela facilite le montage des bobines, lequel peut s'effectuer avec des bobines préfabriquées.

Chaque épanouissement polaire 3a présente une section totale *sₜ,* représentée hachurée à la figure 3, et une section ajourée *sₐ,* définie par les canaux de refroidissement 5 parcourant l'épanouissement polaire 3a. La section ajourée *sₐ* représente de préférence plus de 25% de la section totale *sₜ* de l'épanouissement polaire 3a. La section *sₜ* est délimitée par le contour externe de l'épanouissement 3a et par une droite fictive prolongeant le corps 3b du pôle.

Les canaux 5 peuvent présenter des sections différentes au sein d'un même épanouissement polaire 3 a.

Pour réaliser la masse magnétique de la figure 3, on utilise des tôles identiques mais inversées par paquets de façon à former l'alternance de dents 6 et de passages élargis 20 entre deux dents 6 consécutives.

Le rotor 1 est par exemple intégré à une machine électrique tournante, non représentée, comportant un ventilateur centrifuge. En variante, le ventilateur est un ventilateur à canaux multiples. Dans une autre variante encore, le ventilateur est réalisé en mettant en série un ventilateur centrifuge et un ventilateur axial.

L'air aspiré par le ventilateur traverse les canaux de refroidissement 5 situés dans les épanouissements polaires 3a de chaque pôle saillant 3. En outre, l'air peut circuler dans l'entrefer et au travers des canaux 7 ménagés à la base des espaces interpolaires E.

Lorsque les canaux 5 parcourent de façon discontinue les épanouissements polaires 3a, c'est-à-dire lorsque les épanouissements polaires des pôles saillants 3 présentent chacun une forme dentelée comme illustré à la figure 3, une telle discontinuité permet une circulation transversale de l'air depuis les intervalles 20 entre deux dents 6 vers l'espace interpolaire E.

Sur la figure 5, on a représenté partiellement le stator et le rotor d'une machine électrique tournante selon l'invention. On voit sur cette figure que l'ajour unique de l'extension 18 définissant le canal 7 des exemples des figures 1 et 3 peut être remplacé par une pluralité de canaux 7 séparés par des cloisons 23.

L'invention peut être mise en œuvre sur des rotors à épanouissements polaires rapportés. L'invention ne se limite pas à des pôles saillants particuliers.

L'invention peut s'appliquer à des rotors monoblocs, usinés dans une masse d'un matériau magnétique.

## Revendications

1. Rotor (1) pour machine électrique tournante, s'étendant selon un axe longitudinal (X), comportant :
- des pôles saillants (3) présentant des épanouissements polaires (3a), et **caractérisé en ce qu'**il comporte des canaux internes (5) de refroidissement, parcourant axialement au moins un épanouissement polaire (3a), les canaux de refroidissement (5) étant séparés au sein de l'épanouissement polaire (3a) par des cloisons (4).

2. Rotor selon la revendication 1, les épanouissements polaires (3a) des pôles saillants (3) étant parcourus chacun par 2 à 15 canaux de refroidissement (5).

3. Rotor selon la revendication 1 ou 2, les canaux de refroidissement (5) parcourant toute la longueur (L) de la masse magnétique du rotor (1).

4. Rotor selon l'une quelconque des revendications précédentes, les canaux de refroidissement (5) parcourant de façon continue le rotor (1) selon son axe longitudinal (X).

5. Rotor selon l'une quelconque des revendications 1 à 3, les épanouissements polaires (3a) présentant chacun une forme dentelée définissant des dents (6).

6. Rotor selon la revendication précédente, deux séries de dents (6) consécutives, lorsque l'on se déplace autour de l'axe longitudinal (X) du rotor (1), étant décalées axialement d'une dent (6).

7. Rotor selon la revendication 5 ou 6, la dimension axiale (*Lₐ*) d'une dent (6) étant égale à celle (*Lₑ*) de l'intervalle (20) entre deux dents(6).

8. Rotor selon l'une quelconque des revendications précédentes, chaque épanouissement polaire (3a) présentant une section ajourée (sₐ) représentant plus de 25% de sa section totale (sₜ).

9. Rotor selon l'une quelconque des revendications précédentes, deux pôles saillants (3) voisins définissant entre eux un espace interpolaire (E), au moins un canal de refroidissement (7) parcourant une extension (18) à la base de l'espace interpolaire (E).

10. Rotor selon l'une quelconque des revendications précédentes, les pôles saillants (3) étant formés par un assemblage de tôles magnétiques (2), identiques et monobloc.

11. Rotor selon l'une quelconque des revendications 1 à 9, le rotor étant monobloc.

12. Machine électrique tournante comportant un rotor (1) selon l'une quelconque des revendications précédentes.

## Patentansprüche

1. Rotor (1) für eine rotierende elektrische Maschine, welcher sich entlang einer Längsachse (X) erstreckt, umfassend:
- ausgeprägte Pole (3), die Polschuhe (3a) aufweisen, und
**dadurch gekennzeichnet, dass** er innere Kühlkanäle (5) umfasst, die axial durch wenigstens einen Polschuh (3a) verlaufen,
wobei die Kühlkanäle (5) innerhalb des Polschuhs (3a) durch Trennwände (4) getrennt sind.

2. Rotor nach Anspruch 1, wobei die Polschuhe (3a) der ausgeprägten Pole (3) jeweils von 2 bis 15 Kühlkanälen (5) durchquert werden.

3. Rotor nach Anspruch 1 oder 2, wobei die Kühlkanäle (5) über die gesamte Länge (L) der Magnetmasse des Rotors (1) verlaufen.

4. Rotor nach einem der vorhergehenden Ansprüche, wobei die Kühlkanäle (5) durch den Rotor (1) durchgehend entlang seiner Längsachse (X) verlaufen.

5. Rotor nach einem der Ansprüche 1 bis 3, wobei die Polschuhe (3a) jeweils eine gezahnte Form aufweisen, welche Zähne (6) definiert.

6. Rotor nach dem vorhergehenden Anspruch, wobei zwei Reihen von Zähnen (6), die, wenn man sich um die Längsachse (X) des Rotors (1) herumbewegt, aufeinanderfolgen, axial um einen Zahn (6) versetzt sind.

7. Rotor nach Anspruch 5 oder 6, wobei die axiale Abmessung (*Lₐ*) eines Zahnes (6) gleich derjenigen (*Lₑ*) des Intervalls (20) zwischen zwei Zähnen (6) ist.

8. Rotor nach einem der vorhergehenden Ansprüche, wobei jeder Polschuh (3a) einen von Öffnungen eingenommenen Querschnitt (sₐ) aufweist, der mehr als 25 % seines Gesamtquerschnitts (sₜ) darstellt.

9. Rotor nach einem der vorhergehenden Ansprüche, wobei zwei benachbarte ausgeprägte Pole (3) zwischen sich einen Polzwischenraum (E) definieren, wobei wenigstens ein Kühlkanal (7) durch einen Vorsprung (18) am Fuß des Polzwischenraums (E) verläuft.

10. Rotor nach einem der vorhergehenden Ansprüche, wobei die ausgeprägten Pole (3) von einer Anordnung von identischen und einstückigen Magnetblechen (2) gebildet werden.

11. Rotor nach einem der Ansprüche 1 bis 9, wobei der Rotor einstückig ist.

12. Rotierende elektrische Maschine, welche einen Rotor (1) nach einem der vorhergehenden Ansprüche umfasst.

## Claims

1. Rotor (1) for an electrical rotating machine, extending along a longitudinal axis (X), comprising:
- salient poles (3) having pole shoes (3a), and
**characterized in that** it comprises internal cooling channels (5), running axially through at least one pole shoe (3a),
the cooling channels (5) being separated within the pole shoe (3a) by dividers (4).

2. Rotor according to Claim 1, the pole shoes (3a) of the salient poles (3) each having 2 to 15 cooling channels (5) running through them.

3. Rotor according to Claim 1 or 2, the cooling channels (5) running through the whole length (L) of the magnetic mass of the rotor (1).

4. Rotor according to any one of the preceding claims, the cooling channels (5) continuously running through the rotor (1) along its longitudinal axis (X).

5. Rotor according to any one of Claims 1 to 3, the pole shoes (3a) each having a dentate shape defining teeth (6).

6. Rotor according to the preceding claim, two consecutive series of teeth (6), when moving around the longitudinal axis (X) of the rotor (1), being offset axially by one tooth (6).

7. Rotor according to Claim 5 or 6, the axial dimension (*Lₐ*) of one tooth (6) being equal to that (*Lₑ*) of the gap (20) between two teeth (6).

8. Rotor according to any one of the preceding claims, each pole shoe (3a) having a cut-out section (sₐ) representing more than 25% of its total section (st).

9. Rotor according to any one of the preceding claims, two adjacent salient poles (3) defining between them an interpolar space (E), at least one cooling channel (7) running through an extension (18) at the base of the interpolar space (E).

10. Rotor according to any one of the preceding claims, the salient poles (3) being formed by an assembly of identical and one-piece magnetic sheets (2).

11. Rotor according to any one of Claims 1 to 9, the rotor being in one piece.

12. Electrical rotating machine comprising a rotor (1) according to any one of the preceding claims.
